# EUROPÄISCHE PATENTSCHRIFT

(11) **EP 0 413 949 B1**
(45) Veröffentlichungstag und Bekanntmachung des Hinweises auf die Patenterteilung: **19.01.1994**
(21) Anmeldenummer: 90113534.3
(22) Anmeldetag: 14.07.1990
(51) Int. Cl.: B60T 8/32

(54) **Elektromotorisch antreibbarer Druckerzeuger für eine hydraulische Fahrzeug-Bremsanlage**
Electrically driven pressure source for a hydraulic vehicle brake system
Source de pression entraînée par un moteur électrique pour un système hydraulique de freinage de véhicule

(30) Priorität: 25.08.1989 DE 3928109
(43) Veröffentlichungstag der Anmeldung: 27.02.1991
(73) Patentinhaber: ROBERT BOSCH GMBH, 70442 Stuttgart (DE)
(72) Erfinder: Maisch, Wolfgang, Dr. Dipl.-Ing., D-7141 Schwieberdingen (DE); Steinhauser, Walter, Tech., D-7141 Schwieberdingen (DE); Kaes, Guenter, Ing., D-7000 Stuttgart 40 (DE); Stegmaier, Alwin,Ing., Charleston, SC 29418 (US)

(56) Entgegenhaltungen:
- EP-A- 0 317 303
- DE-A- 3 437 994
- DE-A- 3 707 068
- GB-A- 2 212 574
- US-A- 3 549 210
- US-A- 4 756 391

## Beschreibung

### Stand der Technik

Die Erfindung geht aus von einem Druckerzeuger nach der Gattung des Hauptanspruchs.

Bei einem bekannten Druckerzeuger dieser Art ist der Plungerkolben von einer gleichachsig angeordneten Gewindespindel betätigbar (US-A-4 756 391). Die Gewindespindel ist mittels einer Verdrehsicherung im Gehäuse des Druckerzeugers längsgeführt. Mit der Gewindespindel steht eine Spindelmutter im Eingriff. Die Spindelmutter ist mit dem Zahnradgetriebe verbunden. Außerdem wirkt auf die Spindelmutter eine Spiralfeder als Energiespeicher ein, um die Gewindespindel in ihre Ausgangsstellung zurückzustellen. Um das hierfür von der Spiralfeder aufzubringende Drehmoment zu mindern, kann zwischen dem Zahnradgetriebe und der Spindelmutter eine Kupplung angeordnet sein. Diese soll das Rückdrehen des elektrischen Antriebsmotors beim Rückstellen des Plungerkolbens mit der Gewindespindel vermeiden. Diese bekannte Ausführungsform ist insofern nachteilig, als die Hintereinanderanordnung von Plungerkolben und Gewindespindel relativ viel Bauvolumen erfordert. Außerdem erhöht die Verdrehsicherung den konstruktiven Aufwand.

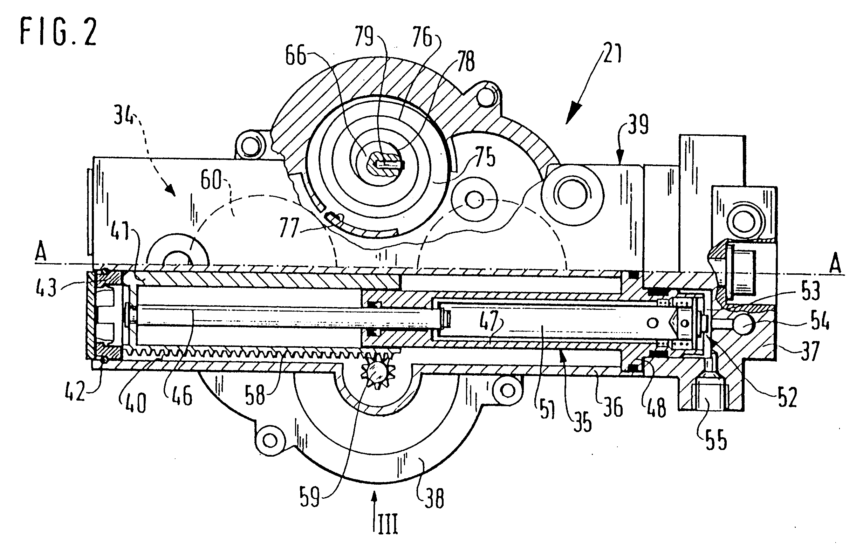

Es ist auch ein Druckerzeuger für eine hydraulische Fahrzeug-Bremsanlage bekannt (DE-A-37 07 068, Figur 2), bei dem eine Zahnstange bei einem Arbeitshub lediglich kraftschlüssig an einem Kolben angreift. Mit der Zahnstange steht ein Ritzel im Eingriff, welches von einem elektrischen Antriebsmotor antreibbar ist. Zur Rückstellung des Kolbens in seine Ausgangsstellung ist eine Schraubendruckfeder vorgesehen. Diese ist gleichachsig zum Kolben angeordnet und vergrößert somit die axiale Baulänge des Druckerzeugers. Die Rückstellung des Kolbens wird durch den hohen hydraulischen Druck im Bremssystem unterstützt. Während der Rückhub des Kolbens durch einen Anschlag begrenzt ist, trifft die beschleunigte Zahnstange mit ihrem anderen Ende auf den Kolben eines zweiten Druckerzeugers. Dadurch wird der Antriebsmotor hohen Verzögerungskräften ausgesetzt.

### Vorteile der Erfindung

Der erfindungsgemäße Druckerzeuger mit den kennzeichnenden Merkmalen des Hauptanspruchs hat demgegenüber den Vorteil, daß einerseits dessen axiale Baulänge verringert wird und andererseits nach dem Anschlagen des Kolbens die Entkopplung vom Antrieb eine Beschädigung von Getriebe und Motor verhindert. Außerdem wird durch die Verwendung des Getriebes zwischen dem mit großer Drehzahl betriebenen Motor und dem mit geringer Drehzahl angetriebenen Ritzel der Einsatz eines kleinen, gewichtssparenden Elektromotors möglich. Mittels dieses die Drehzahl des Antriebsmotors untersetzenden Getriebes ist eine feinfühlige Regelung des mit dem Plungerkolben erzeugten Druckes erzielbar.

Durch die in den Unteransprüchen aufgeführten Maßnahmen sind vorteilhafte Weiterbildungen und Verbesserungen des im Hauptanspruch angegebenen Druckerzeugers möglich.

Die im Anspruch 2 gekennzeichnete Ausgestaltung hat zum einen den Vorteil, daß die Spiralfeder an einem bei einem Kolbenhub wenige Umdrehungen ausführenden Getriebeteil angreift und daher relativ klein ausgebildet sein kann. Zum anderen ist der Freilauf an einer Stelle angeordnet, an der nahezu das gesamte Zahnradgetriebe sowie der Motor vom schlagartig abgebremsten Kolben mit Zahnstange abtrennbar sind.

Durch die im Anspruch 3 angegebene Anordnung wird nicht nur eine günstige Montage der Bauteile, sondern auch ein in sich geschlossener, durch die Vorspannung der Spiralfeder hervorgerufener Kraftfluß in einem Gehäuseteil erzielt.

Die im Anspruch 4 gekennzeichnete Maßnahme ist vorteilhaft, weil sie das Vorspannen der Spiralfeder erleichtert.

### Zeichnung

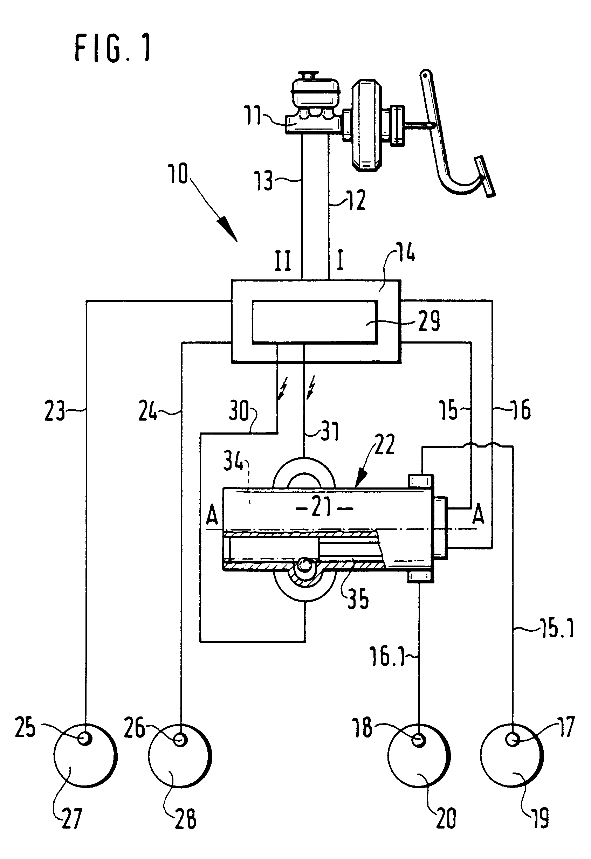

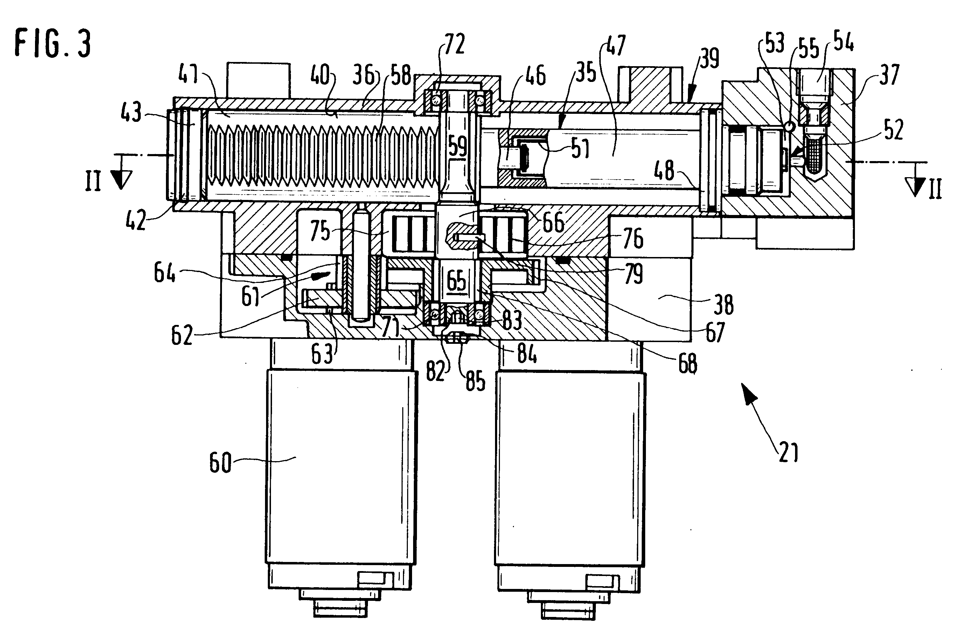

Ein Ausführungsbeispiel der Erfindung ist in der Zeichnung vereinfacht dargestellt und in der nachfolgenden Beschreibung näher erläutert. Es zeigen Figur 1 schematisch eine hydraulische Fahrzeug-Bremsanlage mit einer Druckerzeugereinheit, Figur 2 die Einheit mit einem Druckerzeuger im Schnitt entlang der Linie II - II in Figur 3 mit gegenüber Figur 1 vergrößertem Maßstab und Figur 3 eine Ansicht auf den Druckerzeuger mit seinem Antrieb in Richtung des Pfeiles III in Figur 2 gesehen.

### Beschreibung des Ausführungsbeispieles

Das in Figur 1 dargestellte Schema einer hydraulischen Fahrzeug-Bremsanlage 10 zeigt einen pedalbetätigbaren Hauptbremszylinder 11 zum Erzeugen von Bremsdruck. An den Hauptbremszylinder 11 ist eine Hauptbremsleitung 12 für einen Bremskreis I und eine Hauptbremsleitung 13 für einen Bremskreis II angeschlossen. Die Hauptbremsleitungen 12 und 13 münden in einem Hydroaggregat 14 einer Blockierschutzeinrichtung. Im Bremskreis I führen vom Hydroaggregat 14 Radbremsleitungen 15 und 15.1 sowie 16 und 16.1 zu Radbremszylindern 17 und 18 der Radbremsen 19 und 20 angetriebener Räder einer ersten Fahrzeugachse. Zwischen den Radbremsleitungen 15 und 15.1 sowie 16 und 16.1 liegt eine Druckerzeugereinheit 21 einer Einrichtung 22 zur Begrenzung von Antriebsschlupf der Räder der ersten Fahrzeugachse. Die Druckerzeugereinheit 21 ist später ausführlich beschrieben. Im Bremskreis II sind Radbremsleitungen 23 und 24 an das Hydroaggregat 14 angeschlossen. Die Radbremsleitungen 23 und 24 führen zu Radbremszylindern 25 und 26 der Radbremsen 27 und 28 nicht angetriebener Räder einer zweiten Fahrzeugachse. Außerdem ist ein elektronisches Steuergerät 29 zum Überwachen des Raddrehverhaltens sowie zum Ansteuern des Hydroaggregats 14 zum Zwecke des Blockierschutzes oder der Druckerzeugereinheit 21 zur Begrenzung von Antriebsschlupf vorgesehen. Dabei werden im Hydroaggregat 14 im einzelnen nicht dargestellte Magnetventile und eine Rückförderpumpe geschaltet, um bei Blockiergefahr wenigstens eines Rades den Bremsdruck im entsprechenden Radbremszylinder zu senken, zu halten oder zu erhöhen. Beim Auftreten von Antriebsschlupf wenigstens eines der angetriebenen Räder schaltet das Steuergerät 29 über Leitungen 30 und 31 die Druckerzeugereinheit 21 ein, um Bremsdruck in den entsprechenden Radbremszylinder einzusteuern und die Drehzahl der angetriebenen Räder zu synchronisieren.

Die Druckerzeugereinheit 21 weist je einen dem jeweiligen Radbremszylinder 17 bzw. 18 zugeordneten Druckerzeuger 34 bzw. 35 auf. Da die Druckerzeuger 34, 35 baugleich ausgebildet und symmetrisch zu einer Achse A-A angeordnet sind, ist in den Figuren 2 und 3 die detaillierte Darstellung und die nachfolgende Beschreibung auf den an die Radbremsleitungen 16 und 16.1 angeschlossenen Druckerzeuger 35 beschränkt.

Der Druckerzeuger 35 hat ein im wesentlichen aus einem Gehäuseteil 36, einem Anschlußkopf 37 und einem Getriebegehäuse 38 bestehendes Gehäuse 39. Das Gehäuseteil 36 weist eine zylindrische Bohrung 40 auf, in der ein Hohlzylinder 41 passend längsgeführt ist. An ihrem vom Anschlußkopf 37 abgewandten Ende ist die Bohrung 40 durch eine mit einem Sprengring 42 gesicherte Anschlaghülse 43 begrenzt.

An seinem der Anschlaghülse 43 zugewandten Ende ist der Hohlzylinder 41 mit einem gleichachsig verlaufenden Plungerkolben 46 kleinen Durchmessers und relativ großer axialer Länge verbunden. Der vom Hohlzylinder 41 in nahezu seiner Gesamtlänge übergriffene Plungerkolben 46 erstreckt sich flüssigkeitsdicht in einen Zylinder 47 zur Aufnahme von Bremsflüssigkeit. Der Zylinder 47 greift in der in Figur 2 wiedergegebenen Ausgangsstellung des Druckerzeugers 35 in den Hohlzylinder 41 und ist mit einem Flansch 48 zwischen dem Gehäuseteil 36 und dem Anschlußkopf 37 gehalten. Innerhalb des Zylinders 47 befindet sich ein rohrförmiges Betätigungsglied 51 für ein Sitzventil 52, welches in einem vom Anschlußkopf 37 und vom Zylinder 47 begrenzten Raum 53 des Druckerzeugers 35 angeordnet ist. An diesen Raum 53 ist eine über die Radbremsleitung 16 zum Hauptbremszylinder 11 der Fahrzeug-Bremsanlage 10 führende Leitungsverbindung 54 sowie eine über die Radbremsleitung 16.1 zum Radbremszylinder 18 führende Leitungsverbindung 55 angeschlossen. Das Sitzventil 52 ist mittels des Betätigungsgliedes 51 in Abhängigkeit von der Stellung des Plungerkolbens 46 betätigbar.

Zum Verschieben des Plungerkolbens 46 ist der Hohlzylinder 41 außen mit einer als Zahnstange wirkenden Verzahnung 58 versehen. Mit der Verzahnung 58 kämmt ein Ritzel 59 eines parallelachsigen, mit einem elektrischen Antriebsmotor 60 verbundenen Zahnradgetriebes 61 (Figur 3). Dieses hat ein erstes Stirnzahnrad 62, an dem ein Ritzel 63 des Antriebsmotors 60 angreift. Das vielzahnige Stirnzahnrad 62 ist drehfest mit einem zweiten Stirnzahnrad 64 geringer Zähnezahl verbunden, welches im Eingriff mit einem auf einem Wellenabschnitt 65 der Ritzelwelle 66 gelagerten dritten, ebenfalls vielzahnigen Stirnzahnrad 67 im Eingriff steht. Zwischen diesem Stirnzahnrad 67 und dem Wellenabschnitt 65 der Ritzelwelle 66 ist ein sogenannter Freilauf 68 angeordnet. Ein derartiger Freilauf 68 ist eine in der Größe eines Nadellagers ausgebildete, selbsttätig drehrichtungsabhängig geschaltete Kupplung, die auch als Klemmkörperfreilauf bezeichnet wird. Der Freilauf 68 überträgt Drehmomente zwischen dem Stirnzahnrad 67 und der Ritzelwelle 66 in einer Drehrichtung.

Die Stirnzahnräder 62, 64 und 67 des Zahnradgetriebes 61 sind im Getriebegehäuse 38 angeordnet; die Welle 66 des Ritzels 59 erstreckt sich dagegen sowohl im Getriebegehäuse 38 als auch im Gehäuseteil 36 des Druckerzeugergehäuses 39. Die Welle 66 ist im Getriebegehäuse 38 und im Gehäuseteil 36 mit Wälzlagern 71 und 72 gelagert. Konzentrisch zur Längsachse der Ritzelwelle 66 befindet sich getriebeseitig im Gehäuseteil 36 eine Ausnehmung 75, in der eine Spiralfeder 76 aufgenommen ist. (Weil in Figur 2 die Spiralfeder 76 des Druckerzeugers 35 nicht sichtbar hinter dem Ritzel 59 im Gehäuseteil 36 liegt, ist dieses in der oberen Hälfte der Figur aufgebrochen und die entsprechende, dem Druckerzeuger 34 zugeordnete Spiralfeder wiedergegeben). Diese ist mit ihrem äußeren Federende 77 formschlüssig am Gehäuseteil 36 verankert. Mit ihrem inneren Federende 78 greift die Spiralfeder 76 an einem in die Welle 66 des Ritzes 59 eingepreßten Kerbstift 79 an.

Die nur wenige Windungen aufweisende Spiralfeder 76 dient zum Rückstellen des Plungerkolbens 46 nach einem Hub. Um ein rückstellendes Drehmoment zu erzeugen, muß die Spiralfeder 76 auf folgende Weise vorgespannt werden: Das im Getriebegehäuse 38 gelagerte Wellenende 82 der Ritzelwelle 66 ist mit einem Innensechskant 83 zum Angriff eines entsprechenden Steckwerkzeuges ausgestattet. Mit dem durch eine Bohrung 84 im Getriebegehäuse 38 einführbaren Werkzeug wird die Spiralfeder 66 durch Drehen im Gegenuhrzeugersinn (bezogen auf Figur 2) vorgespannt. Anschließend wird der Hohlzylinder 41 in die Bohrung 40 des Gehäuseteils 36 eingeführt und die Verzahnung 58 in Eingriff mit dem Ritzel 59 gebracht. Danach wird die Anschlaghülse 43 in die Bohrung 40 eingefügt und mit dem Sprengring 42 gesichert. Aufgrund der Vorspannung der Spiralfeder 76 bewegt das Ritzel 59 den Hohlzylinder 41 gegen die Anschlaghülse 43. Hierdurch ist eine weitere Entspannung der Spiralfeder 76 ausgeschlossen. Das Werkzeug kann außer Eingriff mit der Ritzelwelle 66 gebracht und die Bohrung 84 im Getriebegehäuse 38 durch eine Kappe 85 verschlossen werden.

Die Funktionsweise des Druckerzeugers 35 ist folgende:
Im normalen Fahrbetrieb befindet sich der Plungerkolben 46 in seiner in Figur 2 gezeichneten Ausgangsstellung, so daß das Sitzventil 52 offen und der Druckweg zwischen dem Hauptbremszylinder 11 und dem Radbremszylinder 18 frei ist. Bei Betriebsbremsungen und Blockierschutzbremsungen kann daher Bremsdruck im Radbremszylinder 18 aufgebaut bzw. abgebaut werden. Dagegen wird der Druckerzeuger 35 dann wirksam, wenn das Steuergerät 29 beim Anfahren und Beschleunigen des Fahrzeugs Antriebsschlupf am der Radbremse 20 zugeordneten Antriebsrad des Fahrzeugs feststellt. Das Steuergerät 29 schaltet nun den Antriebsmotor 60 des Druckerzeugers 35 ein. Der Motor 60 bewegt nun über das Zahnradgetriebe 61 und das in die Verzahnung 58 des Hohlzylinders 41 angreifende Ritzel 59 den Plungerkolben 46 aus seiner Ausgangsstellung. Am Beginn des Arbeitshubes bewirkt der Plungerkolben 46 das Schließen des Sitzventils 52. Damit ist der Druckweg zum Hauptbremszylinder 11 unterbunden. Im weiteren Verlauf der Hubbewegung des Plungerkolbens 46 verdrängt dieser Bremsflüssigkeit aus dem Zylinder 47 durch die Radbremsleitung 16.1 in den Radbremszylinder 18 und baut dort Bremsdruck auf.

Während dieses Arbeitshubes des Plungerkolbens 46 ist der Freilauf 68 unwirksam, d. h. er überträgt Drehmoment zwischen dem Stirnzahnrad 67 und der Welle 66 des Ritzels 59. Außerdem wird während des Arbeitshubes die einerseits an der Welle 66 des Ritzels 59 und andererseits am Gehäuseteil 36 angreifende Spiralfeder 67 über ihre montageseitige Vorspannung hinaus gespannt. Die Kolbenbewegung wird mit dem Erreichen synchronen Drehverhaltens der angetriebenen Fahrzeugräder beendet.

Am Ende des Beschleunigungsvorganges wird der Plungerkolben 46 in seine Ausgangsstellung zurückgeführt. Dabei wirken der hohe hydraulische Bremsdruck sowie die Spannkraft der Spiralfeder 46 rückstellend auf den Plungerkolben 46. Damit jedoch die Rückführung des Plungerkolbens 46 nicht schlagartig erfolgt, wird der Antriebsmotor 60 vom Steuergerät 29 mit vermindertem Drehmoment in Antriebsdrehrichtung geschaltet (wie beim Arbeitshub), damit die Motorkraft die Rückstellkraft mindert. Damit wird der Antriebsmotor 60 während des Rückhubs des Plungerkolbens 46 als Rücklaufbremse eingesetzt.

Am Ende des Rückhubes öffnet der Plungerkolben 46 durch Angriff am Betätigungsglied 51 das Sitzventil 52 und gibt den Druckweg zwischen dem Hauptbremszylinder 11 und dem Radbremszylinder 18 wieder frei.

Unmittelbar darauf trifft der Hohlzylinder 41 auf die Anschlaghülse 43 und wird schlagartig abgebremst. Gleichzeitig wird nun der Freilauf 68 wirksam, welcher die rotierenden trägen Massen des Antriebsmotors 60 sowie des Zahnradgetriebes 61 vom Ritzel 59 abkuppelt und deren Auslaufen ermöglicht. Eine Zerstörung des Motors 60 oder des Zahnradgetriebes 61 ist damit verhindert. Diese Maßnahme ist besonders dann wirkungsvoll, wenn beim Rückhub des Plungerkolbens 46 die bremsende Wirkung des Antriebsmotors 60 z. B. durch Stromausfall oder durch Einbremsen durch den Fahrzeuglenker oder durch Abschalten des elektrischen Bordnetzes des Fahrzeugs beim Antriebsschlupf Begrenzungsbetrieb unterbleibt.

## Patentansprüche

1. Elektromotorisch antreibbarer Druckerzeuger für eine hydraulische Fahrzeug-Bremsanlage, mit einem Plungerkolben, mit einem Zahnradgetriebe zwischen dem elektrischen Antriebsmotor und dem Plungerkolben, mit einem mechanischen Übertragungsglied zwischen dem Zahnradgetriebe und dem Plungerkolben, mit einer Kupplung zwischen dem elektrischen Antriebsmotor und dem mechanischen Übertragungsglied sowie mit einer den Plungerkolben gegen einen Anschlag rückstellenden Spiralfeder,
dadurch gekennzeichnet,
daß der Plungerkolben (46) wenigstens mittelbar mit einer Zahnstange (Verzahnung 58) verbunden ist, mit der ein Ritzel (59) des Zahnradgetriebes (61) kämmt, daß die Spiralfeder (76) am Zahnradgetriebe (61) angreift und daß die Kupplung als ein Freilauf (68) ausgebildet ist, der bei Auftreffen des Plungerkolbens (46) auf den Anschlag (Anschlaghülse 43) den Antriebsstrang zwischen dem Antriebsmotor (60) und dem Plungerkolben (46) trennt.

2. Druckerzeuger nach Anspruch 1, dadurch gekennzeichnet, daß die Spiralfeder (76) einerseits am mit der Zahnstange (Verzahnung 58) kämmenden Ritzel (59) und andererseits am Druckerzeugergehäuse (Gehäuseteil 36) angreift, während der Freilauf (68) zwischen einem Wellenabschnitt (65) des Ritzels (59) und einem auf dem Wellenabschnitt sitzenden Zahnrad (67) des Getriebes (61) angeordnet ist.

3. Druckerzeuger nach Anspruch 2, dadurch gekennzeichnet, daß die Spiralfeder (76) unter Vorspannung in eine Ausnehmung (75) eines die Zahnstange (Verzahnung 58), einen die Rückstellung der Zahnstange begrenzenden Anschlag (Anschlaghülse 43) und das Ritzel (59) aufnehmenden Teils (36) des Druckerzeugergehäuses (39) eingefügt und mit ihrem äußeren Federende (77) formschlüssig am Gehäuseteil (36) verankert ist.

4. Druckerzeuger nach Anspruch 2, dadurch gekennzeichnet, daß ein Wellenende (82) des Ritzels (59) für den Angriff eines Werkzeugs zum Spannen der Spiralfeder (76) ausgebildet ist.

## Claims

1. Electromotively drivable pressure generator for a hydraulic vehicle brake system, with a plunger piston, with a toothed gearing between the electric drive motor and the plunger piston, with a mechanical transmission member between the toothed gearing and the plunger piston, with a coupling between the electric drive motor and the mechanical transmission member, and with a spiral spring returning the plunger piston up against a stop, characterized in that the plunger piston (46) is connected at least indirectly to a rack (toothing 58), with which a pinion (59) of the toothed gearing (61) meshes, in that the spiral spring (76) engages on the toothed gearing (61), and in that the coupling is designed as a freewheel (68) which, when the plunger piston (46) strikes the stop (stop sleeve 43), separates the drive train between the drive motor (60) and the plunger piston (46).

2. Pressure generator according to Claim 1, characterized in that the spiral spring (76) engages on the one hand on the pinion (59) meshing with the rack (toothing 58) and on the other hand on the pressure-generator housing (housing part 36), whilst the freewheel (68) is arranged between a shaft portion (65) of the pinion (59) and a gearwheel (67) seated on the shaft portion and belonging to the gearing (61).

3. Pressure generator according to Claim 2, characterized in that the spiral spring (76) is inserted under prestress into a recess (75) of a part (36) of the pressure-generator housing (39), the said part receiving the rack (toothing 58), a stop (stop sleeve 43) limiting the return of the rack, and the pinion (59), and is anchored positively with its outer spring end (77) on the housing part (36).

4. Pressure generator according to Claim 2, characterized in that one shaft end (82) of the pinion (59) is designed for the engagement of a tool for tensioning the spiral spring (76).

## Revendications

1. Source de pression à entraînement par moteur électrique pour un système hydraulique de freins de véhicule, comportant un piston plongeur, une transmission à roue dentée entre le moteur électrique et le piston plongeur et un organe mécanique de transmission entre la transmission à roue dentée et le piston plongeur ainsi qu'un embrayage entre le moteur électrique et l'organe de transmission mécanique, un ressort en spirale rappelant le piston plongeur contre une butée, source caractérisée en ce que
le piston plongeur (46) est relié au moins indirectement à une crémaillère (denture 58) avec laquelle engrène un pignon (59) de la transmission à roue dentée (61), le ressort en spirale (76) agissant sur la transmission à roue dentée (61) et l'embrayage est une roue libre (68) qui, lorsque le piston plongeur (46) arrive sur la butée (manchon de butée 43), coupe la liaison de transmission entre le moteur (60) et le piston plongeur (46).

2. Source de pression selon la revendication 1, caractérisée en ce que le ressort en spirale (76) agit, d'une part, sur un pignon (59) engrènant avec la crémaillère (denture 58) et, d'autre part, sur le boîtier de la source de pression (partie de boîtier 36) alors que la roue libre (68) est prévue entre un segment d'axe (65) du pignon (59) et un pignon denté (67) de la transmission (61) monté sur le segment d'axe.

3. Source de pression selon la revendication 2, caractérisée en ce que le ressort en spirale (76) est logé sous précontrainte dans une cavité (75) d'une partie (36) du boîtier (39) de la source de pression qui reçoit la crémaillère (denture 58), une butée limitant le rappel de la crémaillère (manchon de butée 43) et le pignon (59), l'extrémité extérieure (77) du ressort étant accrochée à la partie de boîtier (36) par une liaison par la forme.

4. Source de pression selon la revendication 2, caractérisée en ce qu'une extrémité d'axe (82) du pignon (59) est réalisée pour permettre la prise d'un outil servant à serrer le ressort en spirale (76).
